# EUROPÄISCHE PATENTSCHRIFT

(11) **EP 1 281 566 B1**
(45) Veröffentlichungstag und Bekanntmachung des Hinweises auf die Patenterteilung: **09.01.2008**
(21) Anmeldenummer: 02015467.0
(22) Anmeldetag: 12.07.2002
(51) Int. Cl.: B60N 2/30

(54) **Fahrzeugsitz mit Bodenstellung**
Vehicle seat with lowered to floor position
Siège véhicule avec position abaissée au niveau du plancher

(30) Priorität: 04.08.2001 DE 10138459
(43) Veröffentlichungstag der Anmeldung: 05.02.2003
(73) Patentinhaber: KEIPER GmbH & Co. KG, 67657 Kaiserslautern (DE)
(72) Erfinder: Schehl, Stefan, 66994 Dahn (DE); Roth, Michael, 66887 Rammelsbach (DE); Nasshan, Jürgen, 67655 Kaiserslautern (DE); Brack, Steffen, 67678 Mehlingen (DE)
(74) Vertreter: Patentanwälte Hosenthien-Held und Dr. Held

(56) Entgegenhaltungen:
- EP-A- 0 364 145
- DE-C- 534 434
- DE-C- 19 911 015
- US-A1- 2002 017 797

## Beschreibung

Die Erfindung betrifft einen Fahrzeugsitz, insbesondere einen Kraftfahrzeugsitz, mit den Merkmalen des Oberbegriffs des Anspruches 1.

Bei einem aus der EP 0 364 145 A2 bekannten Fahrzeugsitz dieser Art wird für eine Tischstellung die Lehnenstruktur so auf das Sitzgestell geklappt, dass die Rückseite der Rückenlehne horizontal ausgerichtet ist. Reicht diese Vergrößerung der Ladefläche nicht aus, kann der Fahrzeugsitz in eine flache Bodenstellung gedrückt werden, wobei die stiftartige Verriegelungsvorrichtung mit einem anderen Teilbereich des hochgezogenen Bodenbereichs verriegelt. Ein solcher Fahrzeugsitz lässt in der Praxis noch Wünsche offen. Andere Fahrzeugsitze, die mittels Bewegen ihres Sitzgestells in eine Bodenstellung überführbar sind, sind beispielsweise aus der DE 199 11 015 oder DE-PS 534 434 bekannt.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Indem in der Bodenstellung die Verriegelungsvorrichtung den Sitzrahmenbereich mit dem Bodenbereich verriegelt, ist der Fahrzeugsitz auch in der Bodenstellung gesichert, beispielsweise gegen eine Aufwärtsbewegung im Crashfall. Dabei werden durch die Verwendung der gleichen, am Bodenbereich vorgesehenen Verriegelungsvorrichtung die Anzahl der benötigten Bauteile und damit die Herstellungskosten gering gehalten. Für die doppelt vorhandenen Verriegelungselemente an der Vorderbein-Baugruppe und am Sitzrahmenbereich können kostengünstig Bolzen eingesetzt werden. Als lastaufnehmender Bereich der über die Verriegelungselemente übertragenen Kräfte weist der Bodenbereich eine Aufnahme für die als Bolzen ausgebildeten Verriegelungselemente auf.

Durch das Entriegeln der Vorderbein-Baugruppe, welche vorzugsweise zusätzlich am Bodenbereich angelenkt ist, kann auf einfache Weise das Sitzgestell und damit die Stellung des Fahrzeugsitzes geändert werden. Vorzugsweise hält die verriegelte Vorderbein-Baugruppe das Sitzgestell formstabil, während bei entriegelter Vorderbein-Baugruppe das beispielsweise als Viergelenk ausgebildete Sitzgestell zur Vergrößerung der Ladefläche zusammenfaltbar ist, insbesondere flach faltbar oder zusammendrückbar ist. In der Regel ist für eine symmetrische Kräfteverteilung auf jeder Seite des Fahrzeugsitzes eine dieser Vorderbein-Baugruppen vorgesehen.

Die Vorderbein-Baugruppe kann eine gesondert ausgebildete Strebe aufweisen, welche den mit der Verriegelungsvorrichtung zu verriegelnden Teilbereich bildet und welche beim Übergang von der Sitzstellung in die Bodenstellung nach einem Lösen vom Bodenbereich sich von dem Bodenbereich entfernt und wenigstens zeitweise an einem Anschlag des Sitzgestells anliegt. Die Strebe kann dadurch funktionssicher bewegt, d.h. geführt, werden, insbesondere wieder sicher in ihre Ausgangsposition gebracht werden. Die vorzugsweise durch eine Federbelastung gesicherte Anlage der Strebe kann dabei von einem Anschlag an einer Schwinge an einen Anschlag am Sitzrahmen wechseln, beispielsweise an eine Quertraverse. Vorzugsweise wirkt der Anschlag in die andere Bewegungsrichtung des Sitzgestells als Mitnehmer, so dass keine verschiedenen Bauteile notwendig sind. Die Teilbereiche der Vorderbein-Baugruppe zur Anlenkung am Bodenbereich und zum Verriegeln mit dem Bodenbereich können auch einstückig oder fest verbunden ausgebildet sein.

Die Erfindung ist insbesondere für hintere Sitzreihen eines sogenannten Vans vorteilhaft. Durch die zusammengedrückte, flache, in der Regel versenkte Bodenstellung kann die Ladefläche des Vans stark vergrößert werden, ohne dass der Fahrzeugsitz ausgebaut werden muß. Mit der erfindungsgemäßen Ausgestaltung steht eine einfache Bedienung zur Verfügung. Die Erfindung kann aber auch für andere Fahrzeuge verwendet werden.

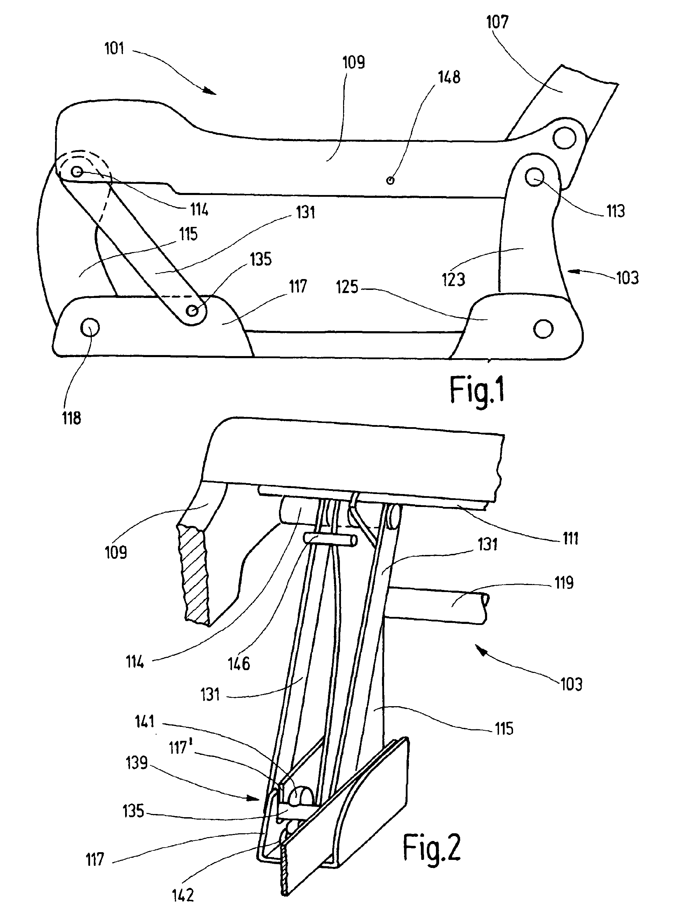

Im folgenden ist die Erfindung anhand zweier in der Zeichnung dargestellten Ausführungsbeispiele näher erläutert. Es zeigen
- Fig. 1: eine Seitenansicht der Struktur des ersten Ausführungsbeispiels in der Sitzstellung,
- Fig. 2: eine perspektivische Teilansicht im Bereich einer vorderen Schwinge,

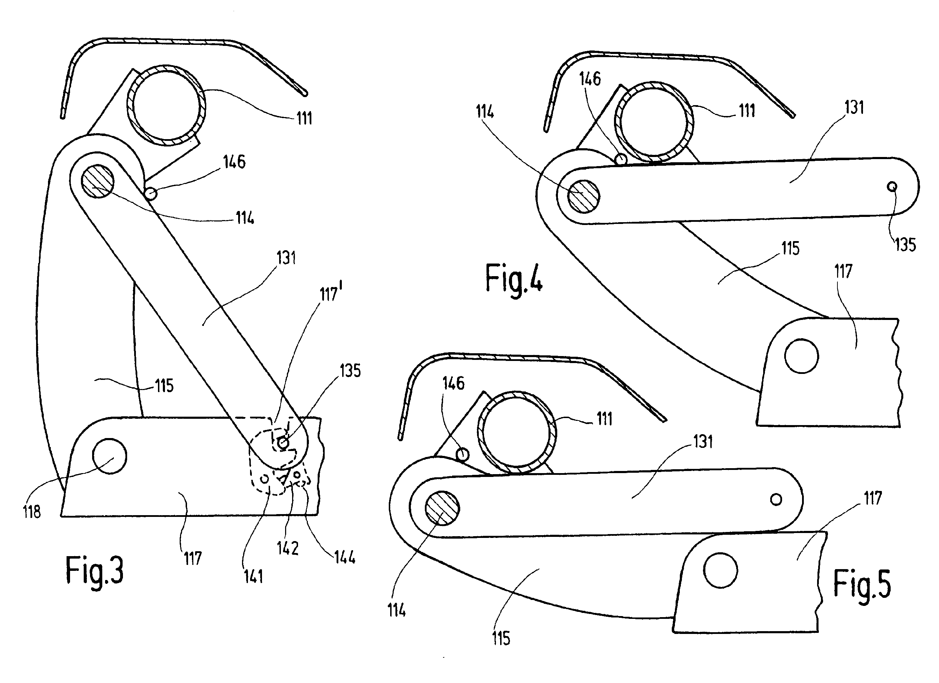

- Fig. 3: eine teilweise geschnitten dargestellte Seitenansicht im Bereich einer vorderen Schwinge in der Sitzstellung,
- Fig. 4: eine Darstellung entsprechend Fig. 3 beim Übergang in die Bodenstellung,

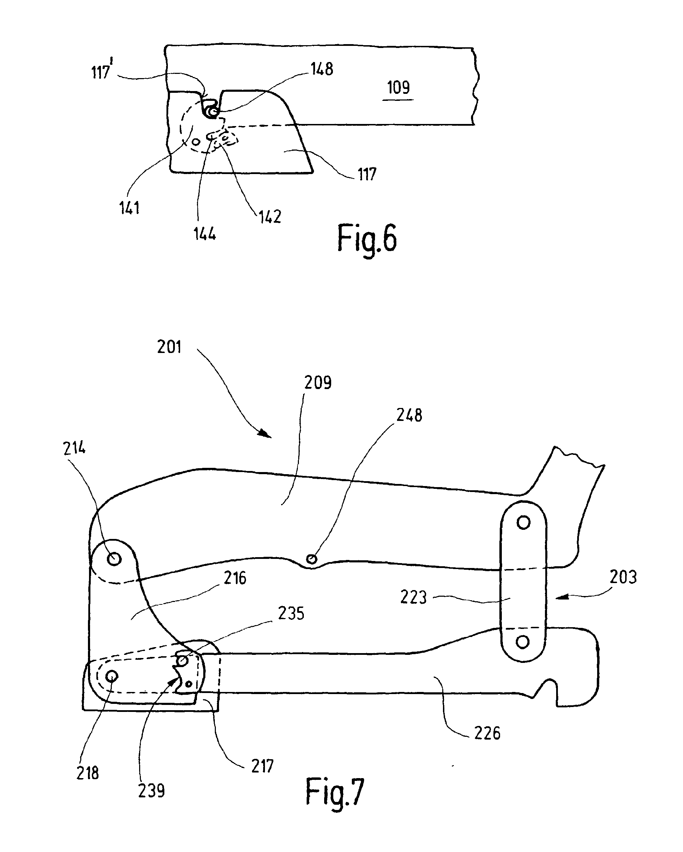

- Fig. 5: eine Darstellung entsprechend Fig. 3 in der Bodenstellung,
- Fig. 6: eine Teilansicht des Bodenbereichs in der Bodenstellung,
- Fig. 7: eine Seitenansicht der Struktur des zweiten Ausführungsbeispiels in der Sitzstellung, welche im vorderen Bodenbereich geschnitten dargestellt ist,

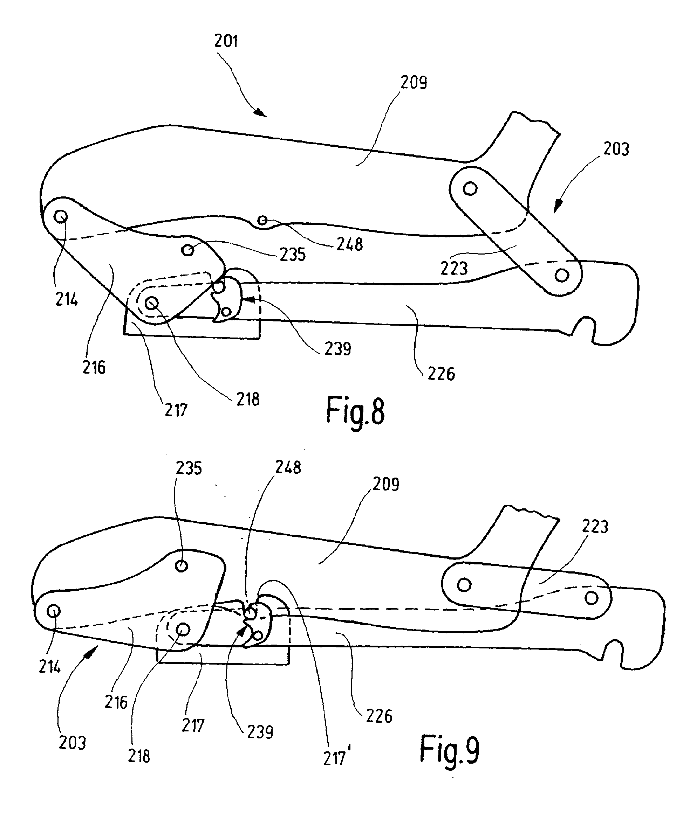

- Fig. 8: eine Darstellung entsprechend Fig. 7 beim Übergang in die Bodenstellung, und
- Fig. 9: eine Darstellung entsprechend Fig. 7 in der Bodenstellung.

Ein Fahrzeugsitz 101 gemäß dem ersten Ausführungsbeispiel ist als Kraftfahrzeug-Rücksitz, vorzugsweise als mittlerer Sitz einer zweiten Sitzreihe eines sogenannten Vans, ausgebildet. Der Fahrzeugsitz 101 weist ein Sitzgestell 103 als Sitzteilstruktur auf, an welchem eine Lehnenstruktur 107 einer Rückenlehne angelenkt ist. Das Sitzgestell 103 trägt auf an sich bekannte Weise ein nicht näher dargestelltes Sitzkissen. Bezüglich der Fahrtrichtung auf der linken und auf der rechten Seite weist das Sitzgestell 103 je ein Sitzrahmen-Seitenteil 109 auf. Die beiden Sitzrahmen-Seitenteile 109 sind in ihrem vorderen Bereich durch eine vordere Sitzrahmen-Quertraverse 111 und in ihrem hinteren Bereich durch eine hintere Sitzrahmen-Quertraverse 113 unter Bildung eines Sitzrahmens fest miteinander verbunden. Die Bestandteile des Sitzrahmens definieren einen Sitzrahmenbereich. Nachfolgend ist zunächst die Sitzstellung des Fahrzeugsitzes 101 beschrieben.

Unterhalb der als Rohr ausgebildeten, vorderen Sitzrahmen-Quertraverse 111 ist an jedem Sitzrahmen-Seitenteil 109 mittels eines oberen Lagerbolzens 114 je eine vordere Schwinge 115 mit ihrem oberen Ende angelenkt, welche mit ihrem unteren Ende an einem fahrzeugstrukturfesten, einen Bodenbereich definierenden, vorderen Lagerbock 117 mittels eines unteren Lagerbolzens 118 als Anlenkstelle angelenkt ist. Die beiden vorderen Schwingen 115 bilden einen vorderen Fußbereich und sind durch eine Schwingen-Quertraverse 119 fest miteinander verbunden. Im hinteren Bereich jedes Sitzrahmen-Seitenteils 109 ist eine hintere Schwinge 123 mit ihrem oberen Ende angelenkt, welche mit ihrem unteren Ende an einem hinteren Lagerbock 125 angelenkt ist. Die beiden Lagerböcke 117 und 125 können auch als ein einstückiges Element ausgebildet sein.

An jedem oberen Lagerbolzen 114 ist auf beiden Seiten der zugeordneten vorderen Schwinge 115 je eine schräg, bezüglich eines durch die Schwinge 115 definierten vorderen Fußbereichs diagonal angeordnete Strebe 131 mit ihrem oberen Ende angelenkt. Jede Schwinge 115 und die ihr zugeordnete Strebe 131 bilden zusammen eine Vorderbein-Baugruppe. Die Streben 131 sind im Bereich ihres unteren Endes durch einen Verriegelungsbolzen 135 auf jeder Seite des Fahrzeugsitzes 101 paarweise miteinander verbunden. Der Verriegelungsbolzen 135 liegt wenigstens mit einem Endbereich in einer schlitzförmigen Aufnahme 117' des vorderen Lagerbocks 117, welche bezüglich des unteren Endes der vorderen Schwinge 115 in Fahrtrichtung weiter hinten angeordnet sind, ungefähr bei einem Drittel des Abstandes von der vorderen Schwinge 115 zur hinteren Schwinge 123. Eine Verriegelungsvorrichtung 139 im Bereich der Aufnahme 117' weist einen schwenkbar am vorderen Lagerbock 117 gelagerten Sperrhaken 141 auf. Der Sperrhaken 141 verriegelt unter Formschluß den Verriegelungsbolzen 135. Die Verriegelungsvorrichtung 139 weist zum Sichern des Sperrhakens 141 noch ein federbelastetes Spannelement 142 für den Normalfall und ein Fangelement 144 zum Abstützen des Sperrhakens 141 im Crashfall auf.

Jede vordere Schwinge 115 weist im Bereich des oberen Lagerbolzens 114 einen parallel zum oberen Lagerbolzen 114 fest an der vorderen Schwinge 115 angebrachten Mitnehmeranschlag 146 auf, welcher in der Sitzstellung unterhalb der vorderen Sitzrahmen-Quertraverse 111, hinter dem oberen Lagerbolzen 114 und oberhalb der Streben 131 angeordnet ist. Eine nicht näher dargestellte, im Bereich des oberen Lagerbolzens 114 angeordnete Feder belastet die Streben 131 gegenüber der vorderen Schwinge 115, in der Zeichnung gegen den Uhrzeigersinn, so daß die Streben 131 von unten her gegen den Mitnchmeranschlag 146 gedrückt werden.

Der Fahrzeugsitz 101 kann außer der vorstehend beschriebenen Sitzstellung noch weitere Stellungen einnehmen, beispielsweise eine Tischstellung mit vorgeklappter Rückenlehne. Für den Übergang in die Bodenstellung oder Flat-Floor-Position wird die Verriegelungsvorrichtung 139, beispielsweise über eine Handschlaufe, manuell entriegelt. Bei der anschließenden Vorklapp-Bewegung des Sitzgestells 103 schwenkt die vordere Schwinge 115 um den unteren Lagerbolzen 118 nach vorne und unten. Der Mitnehmeranschlag 146 gewinnt dabei gegen über dem oberen Lagerbolzen 114 an Höhe. Die am Mitnehmeranschlag 146, welcher hier als Anschlag wirkt, anliegenden Streben 131 schwenken durch ihre Federbelastung nach oben, d.h. in der Zeichung entgegen dem Uhrzeigersinn, so daß der Verriegelungsbolzen 135 die Aufnahme 117' verläßt, und nehmen eine flachere Stellung ein.

Vor Erreichen der Bodenstellung gelangen die Streben 131 in Anlage an die Unterseite der vorderen Sitzrahmen-Quertraverse 111. Während die vordere Schwinge 115 mit dem Mitnehmeranschlag 146 noch etwas weiter in die Bodenstellung schwenkt, verbleiben die Streben 131 näherungsweise in der eingenommenen, nahezu horizontalen Position. Mit Erreichen der Bodenstellung gelangt ein Sicherungsbolzen 148, der seitlich vom Sitzrahmen-Seitenteil 109 absteht, in die Aufnahme 117' und wird von der Verriegelungsvorrichtung 139 verriegelt. Die Bodenstellung ist dadurch gesichert.

Für die Rückkehr von der Bodenstellung in die Sitzstellung des Fahrzeugsitzes 101 wird das Sitzgestell 103 - nach Entriegeln der Verriegelungsvorrichtung 139 - wieder hochgeklappt, d.h. die vorderen Schwingen 115 nach oben und hinten geschwenkt, also in der Zeichnung im Uhrzeigersinn. Nach einem kleinen Schwenkwinkel gelangt der Mitnehmeranschlag 146, welcher nunmehr als Mitnehmer wirkt, in Anlage an die Streben 131 und drückt diese im weiteren Verlauf der Schwenkbewegung nach unten. Aufgrund der gewählten Abmessungen und der Anlage der Strebe 131 am Mitnehmeranschlag 146 gelangt kurz vor Erreichen der Sitzstellung der Verriegelungsbolzen 135 in die Aufnahme 117'. Mit Erreichen der Sitzstellung wird der Verriegelungsbolzen 135 von der Verriegelungsvorrichtung 139 auf die beschriebene Weise verriegelt.

In einer abgewandelten Ausführungsform ist für die Anlenkung der hinteren Schwinge 123 anstelle des hinteren Lagerbocks 125 ein hinterer Fuß vorgesehen, welcher lösbar mit der Fahrzeugstruktur verriegelt ist. Mit einem nach vorne weisenden Schenkel ist der hintere Fuß am vorderen Lagerbock 117 angelenkt. Für den Übergang in die Bodenstellung weist diese Ausführungsform die gleiche Funktionalität auf. Zusätzlich kann diese Ausführungsform nach Entriegeln des hinteren Fußes (und ohne Entriegeln der Streben 131) in eine Packagestellung übergehen.

Das zweite Ausführungsbeispiel eines Fahrzeugsitzes 201 stimmt mit dem ersten Ausführungsbeispiel weitgehend überein, weshalb gleiche und gleichwirkende Bauteile um 100 höhere Bezugszeichen tragen. Das Sitzgestell 203 des Fahrzeugsitzes 201 weist auf jeder Fahrzeugsitzseite als Sitzrahmenbereich ein Sitzrahmen-Seitenteil 209 auf, an welchem in Fahrtrichtung vorne ein dreieckiges, vorderes Bein 216, das an seinem unteren Ende an einem vorderen Lagerbock 217 mittels eines unteren Lagerbolzens 218 als Anlenkstelle angelenkt ist, und hinten eine hintere Schwinge 223 angelenkt. Der vordere Lagerbock 217 definiert einen Bodenbereich, während das vordere Bein 216 eine Vorderbein-Baugruppe definiert. Die hintere Schwinge 223 ist an ihrem unteren Ende an einem hinterem Fuß 226 angelenkt, welcher wiederum mit einem nach vorne weisenden Arm am vorderen Lagerbock 217 angelenkt ist. Der vom vorderen Bein 216 seitlich abstehende Verriegelungsbolzen 235 befindet sich in der Sitzstellung in der Aufnahme 217' des vorderen Lagerbocks 217 und wird von der dort vorgesehenen Verriegelungsvorrichtung 239 des Lagerbocks 217 verriegelt, so daß die Sitzstellung des Sitzgestells 203 gesichert ist. Durch den unteren Lagerbolzen 218 und den Verriegelungsbolzen 235 sind fest miteinander verbundene Teilbereiche der Vorderbein-Baugruppe definiert.

Zum Übergang in die Bodenstellung wird die Verriegelungsvorrichtung 239 entriegelt, so daß sie den Verriegelungsbolzen 235 freigibt. Das vordere Bein 216 wird nun um den unteren Lagerbolzen 218 nach vorne geschwenkt, wobei das Sitzgestell 203 entsprechend nach vorne und unten klappt. Der seitlich vom Sitzrahmen-Seitenteil 209 abstehende Sicherungsbolzen 248 nähert sich dabei dem vorderen Lagerbock 217. Bei Erreichen der Bodenstellung gelangt der Sicherungsbolzen 248 in die Aufnahme 217' und in die Verriegelungsvorrichtung 239 und wird von dieser verriegelt, so daß die Bodenstellung gesichert ist.

Von der Sitzstellung aus kann durch Entriegeln des hinteren Fußes 226 und Hochklappen des Sitzgestells 203 der Fahrzeugsitz 201 in eine Packagestellung überführt werden.

### Bezugszeichenliste

- 101, 201: Fahrzeugsitz
- 103, 203: Sitzgestell
- 107: Lehnenstruktur
- 109,209: Sitzrahmen-Seitenteil
- 111: vordere Sitzrahmen-Quertraverse
- 113: hintere Sitzrahmen-Quertraverse
- 114, 214: oberer Lagerbolzen
- 115: vordere Schwinge
- 117, 217: vorderer Lagerbock
- 117', 217': Aufnahme
- 118, 218: unterer Lagerbolzen, Anlenkstelle
- 119: Schwingen-Quertraverse
- 123,223: hintere Schwinge
- 125: hinterer Lagerbock
- 131: Strebe
- 135, 235: Verriegelungsbolzen
- 139, 239: Verriegelungsvorrichtung
- 141: Sperrhaken
- 142: Spannelement
- 144: Fangelement
- 146: Mitnehmeranschlag
- 148, 248: Sicherungsbolzen
- 216: vorderes Bein
- 226: hinterer Fuß

## Patentansprüche

1. Fahrzeugsitz, insbesondere Kraftfahrzeugsitz, mit einem gelenkigen Sitzgestell (103; 203), der unter Bewegung des Sitzgestells (103; 203) von einer Sitzstellung in eine Bodenstellung überführbar ist, wobei das Sitzgestell (103; 203) einen Sitzrahmenbereich (109, 111, 113; 209), einen Bodenbereich (117; 217), wenigstens eine Vorderbein-Baugruppe (115, 131; 216) und eine mit wenigstens einem Verriegelungselement (135, 148; 235, 248) zusammenwirkende Verriegelungsvorrichtung (139; 239) aufweist, wobei die Verriegelungsvorrichtung (139; 239) in der Sitzstellung die Vorderbein-Baugruppe (115, 131; 216) mit dem Bodenbereich (117; 217) lösbar verriegelt und in der Bodenstellung den Sitzrahmenbereich (109, 111, 113; 209) mit dem Bodenbereich (117; 217) verriegelt, **dadurch gekennzeichnet, dass** als Verriegelungselemente ein Verriegelungsbolzen (135; 235) an der Vorderbein-Baugruppe (115, 131; 216) und ein Sicherungsbolzen (148; 248) am Sitzrahmenbereich (109, 11, 113; 209) vorgesehen ist und dass die Verriegelungsvorrichtung (139; 239) am Bodenbereich (117; 217) vorgesehen ist, welcher im Bereich der Verriegelungsvorrichtung (139; 239) eine Aufnahme (117'; 217') für den Verriegelungsbolzen (135; 235) und den Sicherungsbolzen (148; 248) aufweist, wobei die Verriegelungsvorrichtung (139; 239) einen schwenkbar gelagerten Sperrhaken (141) aufweist, welcher unter Formschluss in der Sitzstellung mit dem Verriegelungsbolzen (135; 235) und in der Bodenstellung mit dem Sicherungsbolzen (148; 248) verriegelt.

2. Fahrzeugsitz nach Anspruch 1, **dadurch gekennzeichnet, dass** die verriegelte Vorderbein-Baugruppe (115, 131; 216) das Sitzgestell (103; 203) formstabil hält und durch Entriegeln der Vorderbein-Baugruppe (115, 131; 216) das Sitzgestell (103; 203) flach zusammenfaltbar ist.

3. Fahrzeugsitz nach einem der Ansprüche 1 oder 2, **dadurch gekennzeichnet, dass** die Vorderbein-Baugruppe (115, 131) eine Schwinge (115) und zur Verriegelung mit dem Bodenbereich (117) eine gesondert ausgebildete Strebe (131) aufweist, welche in der Sitzstellung schräg angeordnet und mit dem Bodenbereich (117) lösbar verriegelt ist, wobei die Strebe (131) beim Übergang von der Sitzstellung in die Bodenstellung wenigstens zeitweise an einem Anschlag (146) der Schwinge (115) des Sitzgestells (103) anliegt.

4. Fahrzeugsitz nach Anspruch 3, **dadurch gekennzeichnet, dass** beim Übergang von der Bodenstellung in die Sitzstellung der Anschlag (146) wenigstens zeitweise die Strebe (131) mitnimmt.

5. Fahrzeugsitz nach Anspruch 3 oder 4, **dadurch gekennzeichnet, dass** beim Erreichen der Bodenstellung und/oder beim Verlassen der Bodenstellung die Strebe (131) wenigstens zeitweise an einer Quertraverse (111) des Sitzgestells (103) anliegt.

6. Fahrzeugsitz nach einem der Ansprüche 3 bis 5, **dadurch gekennzeichnet, dass** die Strebe (131) mit ihrem oberen Ende an der Schwinge (115) oder zusammen mit der Schwinge (115) am Sitzrahmenbereich (109, 111, 113) angelenkt ist.

7. Fahrzeugsitz nach einem der Ansprüche 1 oder 2, **dadurch gekennzeichnet, dass** die Vorderbein-Baugruppe (216) in einem Teilbereich mittels einer Anlenkstelle (218) am Bodenbereich (217) angelenkt und in einem fest mit diesem Teilbereich verbundenen, weiteren Teilbereich (235) mit dem Bodenbereich (217) verriegelt ist.

8. Fahrzeugsitz nach Anspruch 7, **dadurch gekennzeichnet, dass** das Sitzgestell (203) beim Übergang in die Bodenstellung und bei der Rückkehr in die Sitzstellung um die Anlenkstelle (218) der Vorderbein-Baugruppe (216) schwenkt.

9. Fahrzeugsitz nach Anspruch 7 oder 8, **dadurch gekennzeichnet, dass** die Vorderbein-Baugruppe (216) dreieckig ist.

10. Fahrzeugsitz nach einem der vorhergehenden Ansprüche, **dadurch gekennzeichnet, dass** die Verriegelungsvorrichtung (139; 239) zum Sichern des Sperrhakens (141) ein federbelastetes Spannelement (142) für den Normalfall und ein Fangelement (144) zum Abstützen des Sperrhakens (141) im Crashfall aufweist.

## Claims

1. Vehicle seat, in particular a motor vehicle seat, having an articulated seat frame (103; 203) which can be moved from a seat position into a base position with the seat frame (103; 203) being moved, the seat frame (103; 203) comprising a seat frame region (109, 111, 113; 209), a base region (117; 217), at least one front leg assembly (115, 131; 216) and a locking device (139; 239) which co-operates with at least one locking element (135, 148; 235, 248), the locking device (139; 239) releasably locking the front leg assembly (115, 131; 216) to the base region (117; 217) in the seat position and locking the seat frame region (109, 111, 113; 209) to the base region (117; 217) in the base position, **characterised in that**, as locking elements, a locking pin (135; 235) is provided on the front leg assembly (115, 131; 216) and a securing pin (148; 248) is provided on the seat frame region (109, 11, 113; 209), and **in that** the locking device (139; 239) is provided at the base region (117; 217) which has, in the region of the locking device (139; 239), a receiving member (117'; 217') for the locking pin (135; 235) and the securing pin (148; 248), the locking device (139; 239) having a pivotably supported locking hook (141) which locks to form a positive-locking connection with respect to the locking pin (135; 235) in the seat position and with respect to the securing pin (148; 248) in the base position.

2. Vehicle seat according to claim 1, **characterised in that** the locked front leg assembly (115, 131; 216) retains the seat frame (103; 203) in an inherently stable state and, by unlocking the front leg assembly (115, 131; 216), the seat frame (103; 203) can be folded up into a flat state.

3. Vehicle seat according to either claim 1 or claim 2, **characterised in that** the front leg assembly (115, 131) has a rocker arm (115) and, for locking to the base region (117), a separately constructed strut (131) which, in the seat position, is arranged in an inclined manner and is releasably locked to the base region (117), the strut (131), when moving from the seat position to the base position, at least temporarily moving into abutment against a stop (146) of the rocker arm (115) of the seat frame (103).

4. Vehicle seat according to claim 3, **characterised in that**, when moving from the base position to the seat position, the stop (146) at least temporarily carries the strut (131).

5. Vehicle seat according to claim 3 or 4, **characterised in that**, when reaching the base position and/or leaving the base position, the strut (131) at least temporarily moves into abutment against a cross-member (111) of the seat frame (103).

6. Vehicle seat according to any one of claims 3 to 5, **characterised in that** the strut (131) is articulated to the rocker arm (115) with the upper end thereof or is articulated, together with the rocker arm (115), to the seat frame region (109, 111, 113).

7. Vehicle seat according to either claim 1 or 2, **characterised in that** the front leg assembly (216) is articulated to the base region (217) in a part-region by means of an articulation location (218) and is locked to the base region (217) in a further part-region (235) which is securely connected to this part-region.

8. Vehicle seat according to claim 7, **characterised in that** the seat frame (203), when moving into the base position and when returning to the seat position, pivots about the articulation location (218) of the front leg assembly (216).

9. Vehicle seat according to claim 7 or 8, **characterised in that** the front leg assembly (216) is triangular.

10. Vehicle seat according to any one of the preceding claims, **characterised in that** the locking device (139; 239) has a resiliently loaded clamping element (142) for securing the locking hook (141) during normal operation and a catch element (144) for supporting the locking hook (141) in the event of a crash.

## Revendications

1. - Siège de véhicule, en particulier siège de véhicule automobile, comportant une carcasse de siège articulée (103 ; 203), qui est apte à passer d'une position de siège à une position de plancher lorsque l'on imprime un mouvement à la carcasse de siège (103 ; 203), la carcasse de siège (103 ; 203) présentant une zone de bâti de siège (109, 111, 113 ; 209), une zone de plancher (117 ; 217), au moins un sous-groupe pour les jambes (115, 131 ; 216) et un dispositif de verrouillage (139 ; 239) coopérant avec au moins un élément de verrouillage (135, 148 ; 235, 248), le dispositif de verrouillage (139 ; 239) dans la position de siège verrouillant de manière amovible le sous-groupe pour les jambes (115, 131 ; 216) avec la zone de plancher (117 ; 217) et dans la position de plancher verrouillant la zone de bâti de siège (109, 111, 113 ; 209) avec la zone de plancher (117 ; 217), **caractérisé par le fait qu'**il est prévu, comme éléments de verrouillage, un boulon de verrouillage (135 ; 235) sur le sous-groupe pour les jambes (115, 131 ; 216) et un boulon de blocage (148 ; 248) sur la zone de bâti de siège (109, 111, 113 ; 209), et que le dispositif de verrouillage (139 ; 239) est prévu sur la zone de plancher (117 ; 217), lequel présente, dans la zone du dispositif de verrouillage (139 ; 239), un logement (117' ; 217') pour le boulon de verrouillage (135 ; 235) et le boulon de blocage (148 ; 248), le dispositif de verrouillage (139 ; 239), présentant un crochet d'arrêt (141) monté à pivotement, lequel effectue le verrouillage par complémentarité de formes avec le boulon de verrouillage (135 ; 235) dans la position de siège et avec le boulon de blocage (148 ; 248) dans la position de plancher.

2. - Siège de véhicule selon la revendication 1, **caractérisé par le fait que** le sous-groupe pour les jambes (115, 131 ; 216) verrouillé maintient la carcasse de siège (103 ; 203) indéformable et la carcasse de siège (103 ; 203) est apte à être repliée à plat par le déverrouillage du sous-groupe pour les jambes (115, 131 ; 216).

3. - Siège de véhicule selon l'une des revendications 1 ou 2, **caractérisé par le fait que** le sous-groupe pour les jambes (115, 131) présente une bielle oscillante (115) et pour effectuer un verrouillage avec la zone de plancher (117) un montant (131) formé séparément, lequel est disposé incliné dans la position de siège et verrouillé de manière amovible avec la zone de plancher (117), le montant (131) s'appuyant lors du passage de la position de siège à la position de plancher au moins temporairement sur une butée (146) de la bielle oscillante (115) de la carcasse de siège (103).

4. - Siège de véhicule selon la revendication 3, **caractérisé par le fait que**, lors du passage de la position de plancher à la position de siège, la butée (146) entraîne au moins temporairement le montant (131).

5. - Siège de véhicule selon l'une des revendications 3 ou 4, **caractérisé par le fait qu'**en atteignant la position de plancher et/ou en quittant la position de plancher le montant (131) repose au moins temporairement sur une traverse (111) de la carcasse de siège (103).

6. - Siège de véhicule selon l'une des revendications 3 à 5, **caractérisé par le fait que** le montant (131) est articulé à la bielle oscillante (115) par son extrémité supérieure ou à la zone de bâti de siège (109, 111, 113) conjointement avec la bielle oscillante (115).

7. - Siège de véhicule selon l'une des revendications 1 ou 2, **caractérisé par le fait que** le sous-groupe pour les jambes (216) est articulé à la zone de plancher (217) dans une zone partielle au moyen d'un point d'articulation (218) et est verrouillé avec la zone de plancher (217) dans une autre zone partielle (235), liée solidairement avec cette zone partielle.

8. - Siège de véhicule selon la revendication 7, **caractérisé par le fait que**, lors du passage dans la position de plancher et lors du retour dans la position de siège, la carcasse de siège (203) pivote autour du point d'articulation (218) du sous-groupe pour les jambes (216).

9. - Siège de véhicule selon l'une des revendications 7 ou 8, **caractérisé par le fait que** le sous-groupe pour les jambes (216) est triangulaire.

10. - Siège de véhicule selon l'une des revendications précédentes, **caractérisé par le fait que**, pour fixer le crochet d'arrêt (141), le dispositif de verrouillage (139 ; 239) présente un élément de serrage chargé par ressort (142) pour le cas normal et un élément d'arrêt (144) pour supporter le crochet d'arrêt (141) en cas de collision.
